# EUROPEAN PATENT APPLICATION

(11) **EP 2 882 182 A1**
(43) Date of publication of application: **10.06.2015**
(21) Application number: 14186373.8
(22) Date of filing: 25.09.2014
(51) Int. Cl.: H04N 5/232, H04N 5/76, B64C 27/04, B64D 1/22, G03B 15/00, G03B 5/00

(54) **Rescue hoist digital video recording system**

(30) Priority: 03.12.2013 US 201361911019 P; 27.02.2014 US 201414191987
(71) Applicant: Goodrich Corporation, Charlotte, North Carolina 28217-4578 (US)
(72) Inventor: Lin, Chuang-Chia, Diamond Bar, CA California 91765 (US)
(74) Representative: Hughes, Andrea Michelle

(57) **Abstract**

Embodiments of the disclosure include a rescue hoist digital video recording system 200 for an aircraft 100 includes one or more sensors 204 disposed on the aircraft, a hoist 202 configured to raise and lower a rescue crew/equipment from the aircraft, and one or more cameras 206 disposed on the the rescue hoist digital video recording system also includes a controller 210 configured to receive information from the one or more sensors and the hoist, the controller operates the one or more cameras based on the received information.

## Description

### BACKGROUND OF THE INVENTION

The present disclosure relates to rescue systems for an aircraft, and more specifically, to a rescue hoist digital video recording system for an aircraft.

Aircraft, such as helicopters, are often used for search and rescue operations in which a hoist system attached to the aircraft is used to both lower rescue personal to the ground and to evacuate people in need. These types of rescue operations can be videotaped for training, safety, liability, and other reasons. Currently, recording of rescue operations is manually performed by an operator on the aircraft using a hand-held video camera. For example, an individual in the aircraft may use a hand held video camera to record a person being lowered into a rescue situation and being lifted out with an injured person.

Tasking a person already on the aircraft, such as an individual who operates the hoist on the aircraft, with operating a video camera impairs the safety of the rescue operation as the individual may be distracted by operating the video camera. In addition, since the passenger space and payload of the aircraft is limited, having a person on the aircraft solely for recording the rescue operation is not practically feasible. Therefore, many of existing recordings are performed with minimum human intervention (e.g. tie up a camera and just let it self-record) and often fail to properly capture the action. There is also potential risk of violating FAA regulation by operating non-certified equipment (the video camera) in flight.

### BRIEF DESCRIPTION OF THE INVENTION

According to one embodiment, a rescue hoist digital video recording system for an aircraft includes one or more sensors disposed on the aircraft, a hoist configured to raise and lower a rescue crew/equipment from the aircraft, and one or more cameras disposed on the aircraft. The rescue hoist digital video recording system also includes a controller configured to receive information from the one or more sensors and the hoist, wherein the controller operates the one or more cameras based on the received information.

Accordingly to another embodiment, an aircraft having a rescue hoist digital video recording system is provided. The rescue hoist digital video recording system includes one or more sensors disposed on the aircraft, a hoist configured to raise and lower a rescue crew/equipment from the aircraft, and one or more cameras disposed on the aircraft. The rescue hoist digital video recording system also comprises a controller configured to receive information from the one or more sensors and the hoist, wherein the controller operates the one or more cameras based on the received information.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of an aircraft having a rescue hoist digital video recording system in accordance with an embodiment of the disclosure; and
FIG. 2 is a block diagram of a rescue hoist digital video recording system in accordance with an embodiment of the disclosure; and
FIG. 3 is a flowchart of a method for operating a rescue hoist digital video recording system in accordance with an embodiment of the disclosure.

### DETAILED DESCRIPTION OF THE INVENTION

Embodiments of the invention include a digital video recording system disposed on an aircraft. The digital video recording system is configured to automatically record video of the actions of rescue personnel on the aircraft without requiring personnel on the aircraft to divert their attention from the rescue operation.

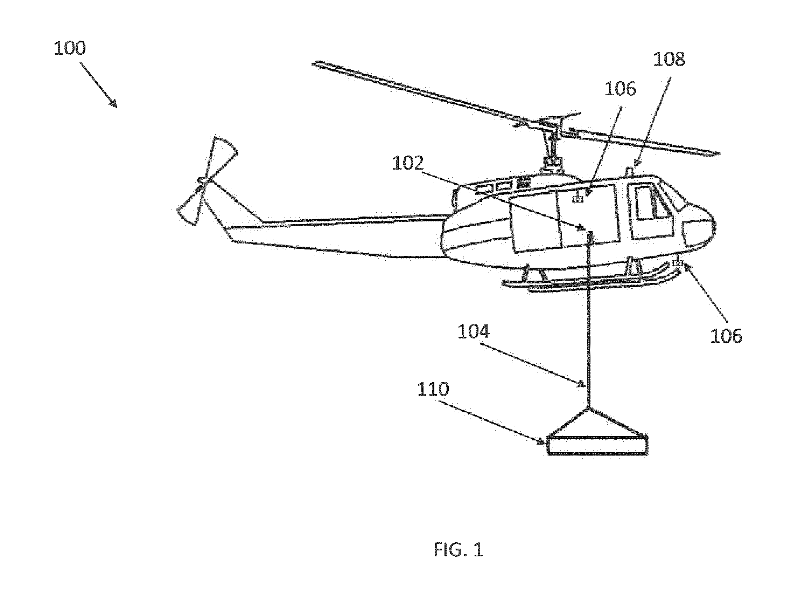

Referring now to FIG. 1, a schematic diagram of an aircraft 100 having a rescue hoist digital video recording system in accordance with an embodiment of the disclosure is shown. The aircraft 100 includes a hoist 102 that is used to raise and lower a cable 104. The cable 104 is typically connected to a hook assembly and it may be used to raise and lower rescue personnel or basket 110 that can be used to carry supplies or people.

In one embodiment, the rescue hoist digital video recording system includes one or more cameras 106 that can be located both inside and outside of the aircraft 100. For example, a first camera 106 may be disposed inside of the aircraft 100 to record the actions of an operator of the hoist 102 and a second camera 106 may be disposed on a bottom surface of the aircraft or the hoist/boom to record the actions of rescue personnel on or around the end of the cable 104.

In one embodiment, the rescue hoist digital video recording system includes one or more sensors 108 that are used to monitor the environmental and operational conditions of the aircraft, such as wind speed, pitch, yaw, elevation, and the like. In addition, the hoist 102 may include a sensor configured to monitor the operation of the hoist 102. For example, the sensor may monitor the pay out of the cable 104, which is the length of the cable that has been extend from the aircraft, and/or the fleet angle of the cable. In one embodiment, the rescue hoist digital video recording system may be configured to automatically begin and stop recording based on the operational state of the hoist 102. For example, the rescue hoist digital video recording system may begin recording once the hoist 102 is utilized and may be configured to stop recording once the hoist 102 returns to its non-use state.

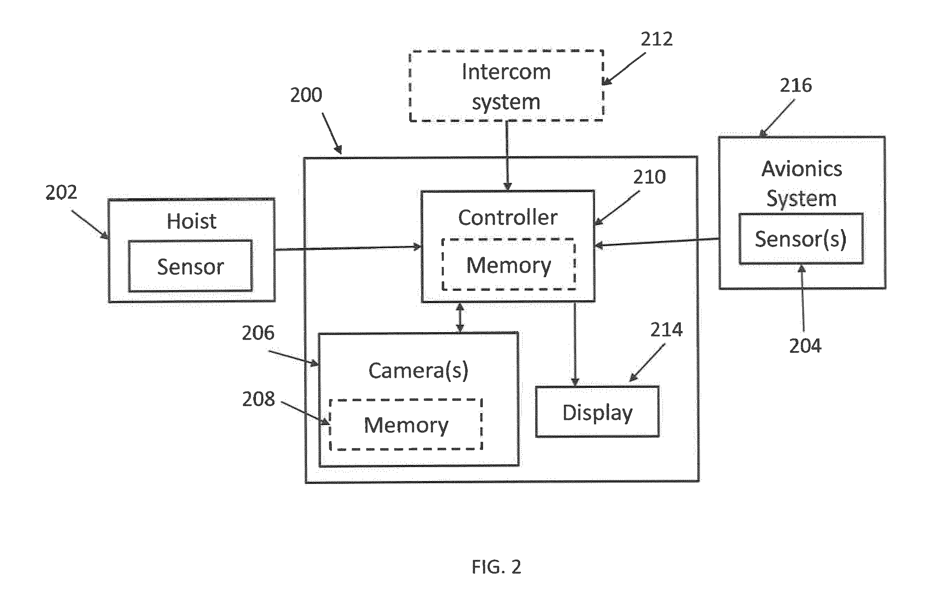

Referring now to FIG. 2, a block diagram of a rescue hoist digital video recording system 200 in accordance with an embodiment of the disclosure is shown. The rescue hoist digital video recording system 200 includes a controller 210 configured to receive input from the hoist 202 and one or more sensors 204 disposed on the aircraft. The sensors 204 may be part of the avionics system 216 of the aircraft or part of the hoist 202. The controller 210 is also configured to control the operation of one or more cameras 206 disposed on the aircraft based on the input from the hoist 202 and sensors 204. In one embodiment, the rescue hoist digital video recording system 200 may also include a memory 208 that is configured to receive and store video captured by the video cameras 206. In other embodiments, the cameras 206 may include a storage medium for storing the captured video. In one embodiment, the rescue hoist video recording system may also include a video display 214 which will provide real time image of the rescue action to the pilot or the hoist operator.

In one embodiment, the controller 210 may be a digital signal processing (DSP) circuit, a field-programmable gate array (FPGA), an application specific integrated circuits (ASICs) or the like. The controller 210 can be any custom made or commercially available processor, a central processing unit (CPU), an auxiliary processor among several processors, a semiconductor based microprocessor (in the form of a microchip or chip set), a macroprocessor, or generally any device for executing instructions.

In one embodiment, the memory 208 may include, but is not limited to, any one or combination of volatile memory elements (e.g., random access memory (RAM, such as DRAM, SRAM, SDRAM, etc.) and nonvolatile memory elements (e.g., ROM, erasable programmable read only memory (EPROM), electronically erasable programmable read only memory (EEPROM), programmable read only memory (PROM), flash memory, Solid-State drives, tape, compact disc read only memory (CD-ROM), disk, diskette, cartridge, cassette or the like, etc.). Moreover, the memory 208 may incorporate electronic, magnetic, optical, and/or other types of storage media.

In one embodiment, the controller 210 is configured to utilize information received from sensors on the hoist 202 regarding cable pay out to automatically adjust the zoom and focus of at least one of the cameras 206 to ensure the action of the rescuer is in focus and clearly captured by the camera 206. In addition, the controller 210 may also use information from the sensors 204, such as the pitch and yaw of the aircraft relative to the cable to automatically adjust the angle of at least one of the cameras 206 to ensure the action of the rescuer is captured by the camera 206.

For example, the controller 210 can keep track of the amount of cable that the hoist 202 has extended, which indicates the distance of the rescue personnel to the helicopter and use that information to increase the zoom, either optical or digital, of at least one of the cameras 206 so that the action of the rescuer is captured by the camera 206. Noted that typically cable pay out can reach 90 m (300 feet), without zooming it's going to be very difficult to properly see the action from 90 m (300 feet) away.

In one embodiment, the controller 210 may use information from one of the sensors 204 from the hoist or the aircraft, such as a load sensor or an accelerometer, to create time stamps on the captured video and to capture still photos of the event of cable overload or excess vibration. For example, the controller 210 may be configured to monitor the sensors 204 and upon any of the sensors 204 reporting a value in excess of a predetermined threshold amount, the controller 210 may instruct the camera 206 to take still photos. And the timestamp will allow prompt finding of the relevant video footage post flight. In one embodiment, the controller 210 may be configured to overlay an indication of the sensor value that caused the still photo to be taken on the photo image.

In one embodiment, the rescue hoist digital video recording system 200 is configured to interface with an intercom system 212 of the aircraft. The intercom system 212 carries the audio communications between the rescue personnel, including the hoist operator and the rescue crew, and the pilot. In one embodiment, the controller 210 is configured to store the audio communications between the rescue personnel and the pilot received from the intercom system 212 in the memory 208, together with the video captured. The rescue hoist digital video recording system 200 may record the audio communications between the rescue personnel and the pilot in a synchronized manner with captured video from the cameras 206.

In one embodiment, the controller 210 of the rescue hoist digital video recording system 200 is configured to receive health and usage data from the hoist 202 and the one or more sensors 204. The sensors may provide health and usage data relating to the aircraft. For example, besides cable loading and vibration, cable clutch slippage, hoist motor efficiency, environmental temperature are important indicators of hoist health and these information can be used to drive needed maintenance work post flight. The controller 210 is configured to store and timestamp the health and usage data from the hoist 202 and the one or more sensors 204 in the memory 208.

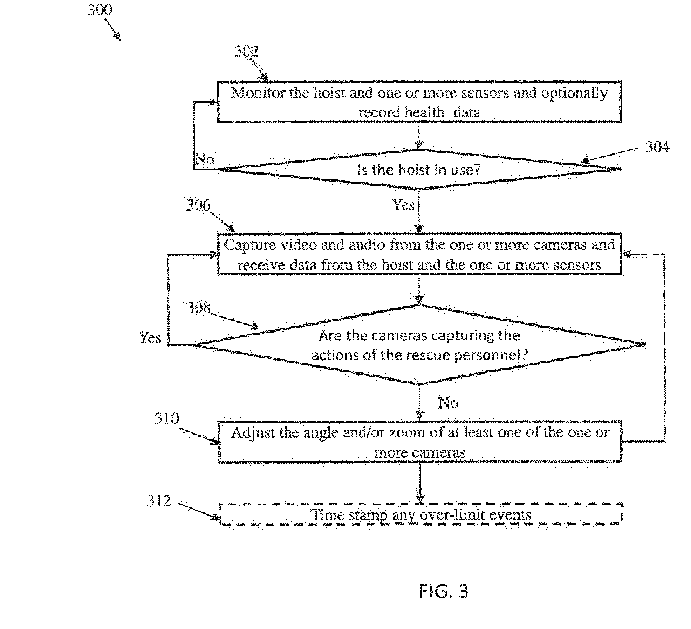

Referring now to FIG. 3, an example flowchart of a method 300 for operating a rescue hoist digital video recording system in accordance with an embodiment of the disclosure is shown. As shown at block 302, the method 300 includes monitoring the hoist and one or more sensors. Next, as shown at decision block 304, the method 300 includes determining if the hoist is in use. If the hoist is in use, the method 300 proceeds to block 306. As shown at block 306, the method 300 includes capturing audio from intercom and video from the one or more cameras and receiving data from the hoist and the one or more sensors. Timestamp of any "over-limit" event will be automatically recorded simultaneously. Next, as shown at decision block 308, the method 300 includes determining if the one or more cameras are capturing the actions of the rescue personnel. If the one or more cameras are capturing the actions of the rescue personnel, the method 300 proceeds to block 310. As shown at block 310, the method 300 includes adjusting the angle and/or zoom of at least one of the one or more cameras. The method 300 may also include time stamping any over limit events on the captured video, as shown at block 312.

One additional feature of the Video Recording System is a Post-Flight Debriefmg System/Software. This software tool can automatically load the recorded video/audio/HUMS data and play them back with regional terrain/map information. Users can review the rescue mission by quickly jump to actions using various timestamp data. This will also provide effective and efficient training for new/future rescue crews.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rescue hoist digital video recording system for an aircraft, the system comprising:
one or more sensors (204) disposed on the aircraft;
a hoist (202) configured to raise and lower a cable (104) from the aircraft;
one or more cameras (206) disposed on the aircraft; and
a controller (210) configured to receive information from the one or more sensors and the hoist, wherein the controller operates the one or more cameras based on the received information.

2. The system of claim 1, wherein the hoist is configured to provide the controller with an indication of a length that the cable has been extended from the aircraft.

3. The system of claim 2, wherein the controller is configured to adjust an angle of at least one of the one or more cameras based on a cable fleet angle.

4. The system of claim 2, wherein the controller is configured to adjust a zoom of at least one of the one or more cameras based on the length that the cable has been extended from the aircraft.

5. The system of claim 1 further comprising a memory (208) configured to store video captured by the one or more cameras.

6. The system of claim 5, wherein the controller is further configured to store audio from a communications system of the aircraft in the memory.

7. The system of claim 1, wherein the one or more sensors are configured to provide the controller with an indication of operational conditions of the aircraft.

8. The system of claim 7, wherein the controller is configured to adjust an angle of at least one of the one or more cameras based on the operational conditions of the aircraft.

9. The system of claim 7, wherein the controller is configured to adjust a zoom of at least one of the one or more cameras based on the operational conditions of the aircraft.

10. An aircraft (100) comprising:
a rescue hoist digital video recording system (200) as claimed in any preceding claim.
